(19) Europäisches Patentamt
European Patent Office
Office européen des brevets

(11) **EP 2 644 717 B1**

(12) **EUROPÄISCHE PATENTSCHRIFT**

(45) Veröffentlichungstag und Bekanntmachung des Hinweises auf die Patenterteilung:
**15.08.2018   Patentblatt 2018/33**

(21) Anmeldenummer: **13158075.5**

(22) Anmeldetag: **07.03.2013**

(51) Int Cl.:
*C22C 38/40* *(2006.01)*      *C22C 38/00* *(2006.01)*
*C22C 38/02* *(2006.01)*      *C22C 38/04* *(2006.01)*
*C22C 38/06* *(2006.01)*      *C22C 38/44* *(2006.01)*
*C21D 9/00* *(2006.01)*      *C21D 1/18* *(2006.01)*
*C22C 38/46* *(2006.01)*      *C22C 38/58* *(2006.01)*
*B29C 33/38* *(2006.01)*

(54) **VORMATERIAL FÜR KUNSTSTOFFFORMEN ODER KUNSTSTOFFFORM**

RAW MATERIAL FOR PLASTIC MOLDS OR PLASTIC MOLD

MATIÈRE BRUTE POUR DES MOULES EN PLASTIQUE OU MOULE EN PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2012   DE 202012003298 U**

(43) Veröffentlichungstag der Anmeldung:
**02.10.2013   Patentblatt 2013/40**

(73) Patentinhaber: **Buderus Edelstahl Gmbh**
**35576 Wetzlar (DE)**

(72) Erfinder: **Vetter, Peter**
**35789 Weilmünster (DE)**

(74) Vertreter: **Patronus IP Patent- und Rechtsanwälte**
**Neumarkter Strasse 18**
**81673 München (DE)**

(56) Entgegenhaltungen:
EP-A1- 0 709 481      WO-A1-03/083154
WO-A1-2011/102402      FR-A- 1 286 627
JP-A- 2008 056 982      JP-A- 2011 042 849

**Beschreibung**

Die Erfindung betrifft ein Vormaterial für Kunststoffformen oder eine Kunststoffform per se mit hoher Gebrauchshärte.

Formen bzw. Matrizen für eine Herstellung von Kunststoffteilen erfordern bestimmte, homogene Gütemerkmale des Werkstoffes, insbesondere über den Querschnitt, damit die damit gefertigten Kunststoffteile während der gesamten Einsatzzeit der Form bzw. für eine geplante Stückzahl des Erzeugungsloses eine im Wesentlichen unverändert hohe Qualität aufweisen.

Die wichtigsten Eigenschaften, die ein Vormaterial oder eine letztlich aus diesem gebildete Form aufweisen sollen, sind einerseits eine homogene Verteilung einer hohen Materialhärte, um Abrasionen bzw. Verschleiß sowie bleibende Formänderungen im Arbeitsflächenbereich zu vermeiden und andererseits gleiche Mikrostrukturen und hohen Reinheitsgrad im Werkstoff zur gezielten und genauen Bearbeitung der Formflächen durch Abspanen, Polieren und/oder chemischem Strukturieren derselben.

Gemäß EP 1 251 187 B1 ist die Verwendung eines Werkzeugstahles zur Herstellung von Formen für Kunststoffteile mit einer Zusammensetzung in Gew.-% von:

$$C = 0.25 - 0.30$$

$$Si = 0.04 - 0.20$$

$$Mn = 1.20 - 2.00$$

$$Cr = 1.00 - 2.00$$

$$Ni = 0.90 - 1.50$$

$$Mo = 0.30 - 0.80$$

$$V \leq 0.20$$

$$Al = 0.01 - 0.03$$

bekannt.

Dieser Werkstoff wurde im Hinblick auf daraus gebildete Kunststoffformen mit hoher Kernhärte und großem Durchmesser geschaffen.

Ein Ni-Gehalt von 0.90 - 1.50 Gew.-% vermittelt dem Werkstoff eine durchgehende, den Erfordernissen entsprechende Härte im Teil beim Vergüten des Werkstoffes, ohne dass aufwändige legierungstechnische Maßnahmen, wie beispielsweise ein Legieren mit Bor sowie Aluminium und Titan, für eine Erhöhung der Einhärtetiefe erforderlich sind.

Als Nachteil dieses Werkstoffes kann jedoch angesehen werden, dass zumeist über einem Wert von 31 HRC (etwa 298 HB) liegende Materialhärten nicht oder nicht wirtschaftlich gesichert mit hohem Aufwand erreicht werden.

WO 03/083154 offenbart einen Stahl für Kunststoffgiessen, der Bor enthält. EP0709481 A1 offenbart einen Stahl für Kunststoffformen, der Bor enthält. Die Erfindung setzt sich nun zum Ziel, aufbauend auf die Verwendung eines Werkzeugstahles für Kunststoffformen gemäß EP 1 251 187 B1 ein Vormaterial für Kunststoffformen oder eine Kunststoffform per se zu schaffen, welche im vergüteten Zustand eine erhöhte Werkstoffhärte und Werkstoffhomogenität bei nur geringfügiger Verminderung des Durchhärtevermögens aufweist.

Dieses Ziel wird bei einem Vormaterial oder einer Kunststoffform der eingangs genannten Art erreicht, welches bzw. welche im vergüteten Zustand eine Werkstoffhärte von höher als 340 HB aufweist, mit einer Zusammensetzung von in Gew.-%

$$C = 0.25 - 0.35$$

$$Si = 0.04 - 0.20$$

$$Mn = 1.00 - 2.00$$

$$Cr = 1.00 - 2.00$$

$$Ni = 0.30 - kleiner\ 0.90$$

$$Mo = 0.30 - 0.80$$

$$V = kleiner/gleich\ 0.20$$

$$Al = 0.01 - 0.03$$

$$N = 0.0025 - 0.0150$$

$$S = kleiner\ 0.15$$

Fe sowie herstellungsbedingte Verunreinigungen als Rest.

Die mit der Erfindung erreichten Vorteile sind im Wesentlichen darin zu sehen, dass im Vergleich mit dem Werkstoff gemäß EP 1 251 187 B1 durch eine Reduzierung des Nickel-Gehaltes bei einer gegebenen Abkühlrate eine Erhöhung des Kohlenstoffgehaltes möglich wird, ohne die Restaustenitbildung zu verstärken. Dies führt zu einer höheren Härteannahme und ermöglicht die Einstellung einer Werkstoffhärte von höher als 340 HB (höher als 36 HRC) bei ausreichend hohen Anlasstemperaturen.

Um eine besonders homogene feinkörnige Mikrostruktur des erfindungsgemäßen Kunststoffformenstahls zu erreichen, ist, wie gefunden wurde, bei einem Aluminiumgehalt von 0.01 bis 0.03 Gew.-% eine Stickstoffkonzentration von 25 bis 150 ppm einzustellen. Kleinere Gehalte als 0.0025 Gew.-% sind aufgrund des gegebenen Cr- und Mn-Gehaltes für eine Feinkörnigkeit unwirksam und größere Gehalte als 0.015 Gew.-% können zur Inhomogenität und groben Nitridausscheidungen über den Querschnitt der Kunststoffform führen.

In einer bevorzugten Ausführungsform der Erfindung kann durch legierungstechnische Maßnahmen und bei einer entsprechenden Vergütetechnologie eine Werkstoffhärte von höher 355 bis 412 HB eingestellt werden.

Erfindungsgemäß werden hohe Materialhärtewerte bei nur geringfügig verringerten Durchvergütungseigenschaften einer Kunststoffform bei Kohlenstoffgehalten von über 0.30 bis 0.34 Gew.-% und/oder Nickelkonzentrationen von 0.38 bis 0.90 Gew.-% des Formwerkstoffes nach dem Härten und Anlassen erreicht.

Die Güte bzw. die Gebrauchseigenschaften, insbesondere hinsichtlich des Vergütegefüges und der Härte über den Durchmesser des Vormaterials oder der Kunststoffform kann/können weiters gesteigert werden, wenn ein Wert D zwischen 2.20 und 3.50 liegt, welcher Wert D aus (Gew.-% Mn) + 2x (Gew.-% Ni) gebildet ist.

Ein eingeschränkter Gehalt an Molybdän des Stahles und zwar zwischen 0.40 und 0.70 Gew.-% fördert die Homogenität des Gußblockes und verringert die Kohlenstoffseigerung im daraus gefertigten Kunststoffformenstück.

Vanadingehalte von 0.015 bis 0.18 Gew.-% im Werkstoff fördern dessen Anlassbeständigkeit.

Eine vorteilhafte Wirkung von Stickstoff auf eine Homogenisierung der Gefügestruktur in großen Kunststoffformenstücken wird in einem Gehaltsbereich von N = 0.005 bis 0.01 Gew.-% erreicht.

Wenn keine besonders ausgeprägt günstige Zerspanbarkeit des vergüteten Werkstoffes erforderlich ist, kann es, insbesondere bei chemischen Beanspruchungen und bei hoher Poliergüte der Arbeitsfläche, vorteilhaft sein, wenn ein Schwefelgehalt mit 0.01 Gew.-% limitiert ist.

**Patentansprüche**

1. Vormaterial für Kunststoffformen oder Kunststoffform, welches bzw. welche im vergüteten Zustand eine Werkstoffhärte von höher als 340 HB aufweist, bestehend aus in Gew.-%

    C : 0.25-0.35
    Si : 0.04-0.20
    Mn : 1.00-2.00
    Cr : 1.00-2.00
    Ni : 0.30-<0.90
    Mo : 0.30-0.80
    V : $\leq$0.20
    Al : 0.01-0.03
    N : 0.0025-0.0150
    S : <0.15

Fe sowie herstellungsbedingte Verunreinigungen als Rest.

2. Vormaterial oder Kunststoffform nach Anspruch 1, **gekennzeichnet durch** eine Werkstoffhärte von höher 355 HB bis zu 410 HB.

3. Vormaterial oder Kunststoffform nach Anspruch 1 oder 2, **gekennzeichnet durch** einen Gehalt an C : über 0,30 - 0.34 Gew.-%.

4. Vormaterial oder Kunststoffform nach einem der vorgeordneten Ansprüche **gekennzeichnet durch** einen Gehalt an Ni : 0.38 - kleiner 0.90 Gew.-%.

5. Vormaterial oder Kunststoffform nach einem der vorgeordneten Ansprüche, **gekennzeichnet durch** den Wert D : 2.20 - 3.50, wobei der Wert aus D = (Gew.-% Mn + 2 Gew.-% Ni) gebildet ist.

6. Vormaterial oder Kunststoffform nach einem der vorgeordneten Ansprüche, **gekennzeichnet durch** einen Gehalt an Mo : 0.40 - 0.70 Gew.-%.

7. Vormaterial oder Kunststoffform nach einem der vorgeordneten Ansprüche **gekennzeichnet durch** einen Gehalt an V : 0.015-0.18 Gew.-%.

8. Vormaterial oder Kunststoffform nach einem der vorgeordneten Ansprüche, **gekennzeichnet durch** einen Gehalt an N : 0.005 - 0.01 Gew.-%.

9. Vormaterial oder Kunststoffform nach einem der vorgeordneten Ansprüche, **gekennzeichnet durch** einen Gehalt an S : kleiner 0.01 Gew.-%.

**Claims**

1. Starting material for plastic molds or plastic mold which has a material hardness of greater than 340 HB in the tempered state, with a composition of in% by weight

C : 0.25 - 0.35
Si : 0.04 - 0.20
Mn : 1.00 - 2.00
Cr : 1.00 - 2.00
Ni : 0.30 - less than 0.90
Mo : 0.30 - 0.80
V : less than or equal to 0.20
Al : 0.01 - 0.03
N : 0.0025 - 0.0150
S : less than 0.15

Fe and manufacturing-related impurities as the remainder.

2. Starting material or plastic mold according to claim 1, **characterized by** a material hardness of higher 355 HB up to 410 HB.

3. Starting material or plastic mold according to claim 1 or 2, **characterized by** a content of
C : above 0.30 - 0.34 wt.-%.

4. Starting material or plastic mold according to one of the preceding claims, **characterized by** a content of
Ni : 0.38 - less than 0.90 wt .-%.

5. Starting material or plastic mold according to one of the preceding claims, **characterized by** the value
D : 2.20 - 3.50,
wherein the value is formed of D = (wt.-% Mn + 2 wt.-% Ni).

6. Starting material or plastic mold according to one of the preceding claims, **characterized by** a content of
Mo : 0.40 - 0.70 wt.-%.

7. Starting material or plastic mold according to one of the preceding claims, **characterized by** a content of
V : 0.015 - 0.18 wt.-%.

8. Starting material or plastic mold according to one of the preceding claims, **characterized by** a content of
N : 0.005 - 0.01 wt.-%.

9. Starting material or plastic mold according to one of the preceding claims, **characterized by** a content of
S : less than 0.01 wt.-%.

**Revendications**

1. Matériau de départ pour moules en plastique ou moule en plastique, ayant une dureté de matériau supérieure à 340 HB à l'état trempé, étant constitué en % en poids de

C : 0,25 - 0,35
Si : 0,04 - 0,20
Mn : 1,00 - 2,00
Cr : 1,00 - 2,00
Ni : 0,30 - < 0,90
Mo : 0,30 - 0,80
V : $\leq$ 0,20
Al : 0,01 - 0,03
N : 0,0025 - 0,0150
S : <0,15

Fe et impuretés liées à la fabrication comme le reste.

2. Matériau de départ ou moule en matière plastique selon la revendication 1, **caractérisé par** une dureté de matériau supérieure à 355 HB jusqu'à 410 HB.

3. Matériau de départ ou moule en matière plastique selon la revendication 1 ou 2, **caractérisé par** une teneur en
C : supérieure à 0,30 - 0,34 % en poids.

4. Matériau de départ ou moule en matière plastique selon l'une des revendications précédentes, **caractérisé par** une teneur en
Ni : 0,38 - inférieure à 0,90 % en poids.

5. Matériau de départ ou moule en matière plastique selon l'une des revendications précédentes, **caractérisé par** la valeur
D : 2,20 - 3,50, dans laquelle la valeur est formée de à partir de D = (% en poids Mn + 2% en poids Ni).

6. Matériau de départ ou moule en matière plastique selon l'une des revendications précédentes, **caractérisé par** une teneur en
Mo : 0,40 - 0,70% en poids.

7. Matériau de départ ou moule en matière plastique selon l'une des revendications précédentes, **caractérisé par** une teneur en
V : 0,015 - 0,18% en poids.

8. Matériau de départ ou moule en matière plastique selon l'une des revendications précédentes, **caractérisé par** une teneur en
N : 0,005 - 0,01% en poids.

9. Matériau de départ ou moule en matière plastique selon l'une des revendications précédentes, **caractérisé par** une teneur en
S : inférieure à 0,01% en poids.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1251187 B1
- WO 03083154 A

- EP 0709481 A1